# EUROPEAN PATENT APPLICATION

(11) **EP 2 280 566 A1**
(43) Date of publication of application: **02.02.2011**
(21) Application number: 10168163.3
(22) Date of filing: 01.07.2010
(51) Int. Cl.: H04W 8/26, H04W 8/18

(54) **System and method for reusing mobile phone numbers**

(30) Priority: 01.07.2009 ES 200930267
(71) Applicant: Vodafone Group PLC, Newbury Berkshire RG14 2FN (GB); Vodafone España, S.A.U., 28108 Alcobendas (ES)
(72) Inventor: Montaner Gutierrez, Javier, E-28050, Madrid (ES); Portasany Sanchez, Carlos, E-28050, Madrid (ES); Escobar Gomez, Susana, E-28050, Madrid (ES)
(74) Representative: Keston, David Arthur

(57) **Abstract**

The invention is a method and system for reusing mobile phone numbers so that they can be used in providing "short-term subscriptions" of a mobile network operator (MNO). Firstly, a pool of free MSISDNs for short-term subscriptions is reserved. Whenever a user requests a short-term subscription, a free MSISDN is reserved from the pool; a pre-determined n-digit number is selected; that n-digit number is appended to the reserved MSISDN, giving a new MSISDN; that new MSISDN is assigned to the user; the new MSISDN is assigned to an IMSI (in the HLR of the MNO); and the user is provided with a SIM card having said IMSI associated with the new MSISDN.

## Description

### Field of the Invention

The present invention is comprised within the field of mobile telecommunications, and more specifically in providing a method for reusing phone numbers, and it is specially used for prepaid subscriptions that are only valid for a limited short period of time (e.g. one week, one month).

### Background of the Invention

Mobile operators have limited dialling numbers (MSISDNs) available for new users due to the restrictions imposed by regulators.

In particular, there are prepaid users that stop using their subscription/MSISDN but the MNO cannot reuse the number typically for one year.

There are intelligent network (IN) solutions that translate the originating or the destination number of a call to a different number. For example, when a call is made to the professional mobile number of a user, the user might have activated an IN service that automatically forwards calls to his/her voicemail number after 6pm. Similarly, the user might have another service activated so that when he/she sets up a call from his/her professional mobile number (e.g. 123456789), the originating address is changed so the receiving party does not see his/her number, but the number of his/her company (e.g. 123000000).

Existing solutions to reuse MSISDNs have a very long lead time due to legal and contractual implications but also because if a number is reused immediately, it is quite likely that, for a while, the new user will keep receiving calls from people that want to talk to the old user, the previous owner of the MSISDN, and that do not know yet that he has changed his number.

It is well-known that abbreviations and acronyms are frequently used in the mobile telephony field. Below is a glossary of acronyms/terms used throughout the present specification:

| | |
|---|---|
| GMSC | Gateway Mobile Switching Centre |
| HLR | Home Location Register |
| IMS | IP Multimedia Subsystem |
| IMSI | International Mobile Subscriber Identity |
| IN | Intelligent Network |
| MNO | Mobile Network Operator |
| MSC | Mobile Switching Centre |
| MSISDN | Mobile Station International ISDN Number |
| SIM | Subscriber Identification Module |
| SMS | Short Message Service |

### Description of the Invention

The invention relates to a method for reusing mobile phone numbers according to claim 1, and to a system according to claim 10. Preferred embodiments of the system and of the method are defined in the dependent claims.

The present invention solves the above commented problems. The proposed invention supports prepaid subscriptions that are only valid for a limited short period of time (e.g. one week, one month), from now on "short term" prepaid users. Once this period expires, the subscription is over and the number can be reused for another prepaid user straight away. From this moment, calls made to the old user will be rejected (e.g. number does not exist) so the new user will not be bothered.

The invention is based on IN, but other technologies such as IMS are also valid.

The method is aimed to be applied on new subscriptions (from now on, short-term subscriptions) of a MNO. The method comprises:
- reserving a pool of free MSISDNs for short-term subscriptions;
- whenever a user requests a short-term subscription:
   - removing a free MSISDN from the pool;
   - choosing a determined n-digit number;
   - appending said determined n-digit number to said free MSISDN removed from the pool, obtaining a new MSISDN;
   - assigning said new MSISDN to said user;
   - assigning, in the HLR of said MNO, said new MSISDN to an IMSI;
   - providing the user with a SIM card having said IMSI associated with the new MSISDN.

The method can further comprise, when appending a determined n-digit number to said free MSISDN removed from the pool, including said determined n-digit number in a list of the last n-digit numbers used for said free MSISDN removed from the pool.

The method can also comprise, when choosing a determined n-digit number, choosing an n-digit number not included in the list of the last n-digit numbers used for said free MSISDN removed from the pool.

The method can further comprise, whenever a short-term subscription of a user ends, adding the MSISDN associated to said user (said MSISDN corresponding to the free MSISDN previously removed from the pool) back to the pool of free MSISDNs for short-term subscriptions.

The method can also comprise, whenever a new MSISDN, which includes the appended n-digit number, is involved in the process of a mobile phone communication, checking that said new MSISDN is valid. The validation of the new MSISDN can be carried out, for instance, by a HLR. It can also be validated by a MSC together with a HLR; the first one validates the appended n-digit number, whereas the latter validates the rest of the digits of the new MSISDN.

In a preferred embodiment n, the number of digits appended to the free MSISDN removed from the pool, is equal to 2.

The appendage of the n-digit number is preferably done at the end of the free MSISDN removed from the pool.

The present invention also includes a system for reusing mobile phone numbers, comprising:
- data processing means configured for:
   - reserving a pool of free MSISDNs for short-term subscriptions;
   - whenever a new user requests a short-term subscription:
      - removing a free MSISDN from the pool;
      - choosing a determined n-digit number;
      - appending said determined n-digit number to said free MSISDN removed from the pool, obtaining a new MSISDN;
      - assigning said new MSISDN to said user;
      - assigning, in the HLR of said MNO, said new MSISDN to an IMSI;
- a SIM card provided to each new user, said SIM card having said IMSI associated with the corresponding new MSISDN.

The data processing means can be further configured for:
- when appending a determined n-digit number to said free MSISDN removed from the pool, including said determined n-digit number in a list of the last n-digit numbers used for said free MSISDN removed from the pool.
- when choosing a determined n-digit number, choosing an n-digit number not included in the list of the last n-digit numbers used for said free MSISDN removed from the pool.
- whenever a short-term subscription of a user ends, adding the MSISDN associated to said user, said MSISDN corresponding to the free MSISDN previously removed from the pool, back to the pool of free MSISDNs for short-term subscriptions.
- whenever a new MSISDN, which includes the appended n-digit number, is involved in the process of a mobile phone communication, checking that said new MSISDN is valid.

### Description of a Preferred Embodiment of the Invention

Most MSISDN, in countries such as Spain, France and Holland, have 11 digits including country code (e.g. 34610123456), although MSISDN can have different number of digits (e.g., 12 digits in Germany and UK).

A range of 11 digits number will be reserved for the "short term" prepaid users, and two more digits will be added for the internal processing of the MNO.

The MNO will have a pool of 11-digit MSISDNs that will be used for short-term subscriptions.

Whenever a new user requests a short-term subscription, the MNO take a free one form the pool and assign it to the user. Before the assignment, the MNO appends two digits to the MSISDN so that the new user will be differentiated from the previous users that used said MSISDN in the recent past.

For instance, MSISDN 34610123456 is free in the pool. The operator removes it from the pool and chooses two digits, e.g. 83, and appends them to the number, obtaining 3461012345683, which is the new 13-digit MSISDN assigned to the user. Every MSISDN will have assigned a list of the last used two-digit combinations that should be avoided when reassigning the number (e.g. 92,45,28,09,82,52,10,83); in this case 83 is the last two-digit used. Note that it can be added n digits instead of two (however two-digit addition should be enough).

The 13-digit MSISDN is now associated to the IMSI stored in the SIM card provided to the user.

Internal processes need to support this new provisioning mechanism.

Form this moment, the user can set up and receive calls/SMS/etc. as any other mobile user.

When the user sets up a call, the IMSI in his/her SIM is passed to the MSC and is used to get the 13-digit MSISDN from the HLR. The called person will see the 13-digit MSISDN on the screen of his phone when he receives the call. Other alternatives may include a generic gateway number for the originating address, or no number at all.

When the user receives a call, the call will be routed to the MNO through a GMSC (the MSC that determines which visited MSC the subscriber who is being called is currently located) and at this point the HLR will inform about the MSC from which the user is hanging. The call will be rerouted to said MSC.

There are two ways to validate that the last two digits are valid:
1) The HLR performs the check of the 13-digit MSISDN.
2) The HLR only checks the 11-digit MSISDN and then the MSC needs to check the validity of the last two digits.

Basically, a call will only be accepted if the last two digits correspond to the value assigned to the current user (83 in the example)

If any other value is received (e.g. 52 that was assigned to a previous user two weeks ago), the call will be rejected (e.g. with the message "Number not known"). This can be achieved through IN.

The method proposed by the present invention can be carried out by data processing means connected to the HLR of the MNO. The data processing means can be, for instance, a dedicated server connected to the HLR, a module contained in the HLR or a software module loaded in the HLR itself.

## Claims

1. Method for reusing mobile phone numbers, to be applied on new subscriptions of a MNO, called short-term subscriptions, **characterized in that** it comprises:
- reserving a pool of free MSISDNs for short-term subscriptions;
- whenever a user requests a short-term subscription:
• removing a free MSISDN from the pool;
• choosing a determined n-digit number;
• appending said determined n-digit number to said free MSISDN removed from the pool, obtaining a new MSISDN;
• assigning said new MSISDN to said user;
• assigning, in the HLR of said MNO, said new MSISDN to an IMSI;
• providing the user with a SIM card having said IMSI associated with the new MSISDN.

2. Method according to claim 1, **characterized in that** it comprises:
- when appending a determined n-digit number to said free MSISDN removed from the pool, including said determined n-digit number in a list of the last n-digit numbers used for said free MSISDN removed from the pool.

3. Method according to claim 2, **characterized in that** it comprises:
- when choosing a determined n-digit number, choosing an n-digit number not included in the list of the last n-digit numbers used for said free MSISDN removed from the pool.

4. Method according to any of previous claims, **characterized in that** it comprises, whenever a short-term subscription of a user ends:
- adding the MSISDN associated to said user, said MSISDN corresponding to the free MSISDN previously removed from the pool, back to the pool of free MSISDNs for short-term subscriptions.

5. Method according to any of previous claims, **characterized in that** it comprises:
- whenever a new MSISDN, which includes the appended n-digit number, is involved in the process of a mobile phone communication, checking that said new MSISDN is valid.

6. Method according to claim 5, **characterized in that** the validation of the new MSISDN is carried out by a HLR.

7. Method according to claim 5, **characterized in that** the validation of the new MSISDN is carried out by a MSC, which validates the appended n-digit number, together with a HLR, which validates the rest of the digits of the new MSISDN.

8. Method according to any of previous claims, **characterized in that** n is equal to 2, being n the number of digits appended to the free MSISDN removed from the pool.

9. Method according to any of previous claims, **characterized in that** the appendage of the n-digit number is done at the end of the free MSISDN removed from the pool.

10. System for reusing mobile phone numbers, the reusing to be applied on new subscriptions of a MNO, called short-term subscriptions, **characterized in that** it comprises:
- data processing means configured for:
• reserving a pool of free MSISDNs for short-term subscriptions;
• whenever a new user requests a short-term subscription:
- removing a free MSISDN from the pool;
- choosing a determined n-digit number;
- appending said determined n-digit number to said free MSISDN removed from the pool, obtaining a new MSISDN;
- assigning said new MSISDN to said user;
- assigning, in the HLR of said MNO, said new MSISDN to an IMSI;
- a SIM card provided to each new user, said SIM card having said IMSI associated with the corresponding new MSISDN.

11. System according to claim 10, **characterized in that** the data processing means are further configured for:
- when appending a determined n-digit number to said free MSISDN removed from the pool, including said determined n-digit number in a list of the last n-digit numbers used for said free MSISDN removed from the pool.

12. System according to claim 11, **characterized in that** the data processing means are further configured for:
- when choosing a determined n-digit number, choosing an n-digit number not included in the list of the last n-digit numbers used for said free MSISDN removed from the pool.

13. System according to any of claims 10-12, **characterized in that** the data processing means are further configured, whenever a short-term subscription of a user ends, for:
- adding the MSISDN associated to said user, said MSISDN corresponding to the free MSISDN previously removed from the pool, back to the pool of free MSISDNs for short-term subscriptions.

14. System according to any of claims 10-13, **characterized in that** the data processing means are further configured for:
- whenever a new MSISDN, which includes the appended n-digit number, is involved in the process of a mobile phone communication, checking that said new MSISDN is valid.
